Europäisches Patentamt

European Patent Office

Office européen des brevets

(19)

(11) Publication number: **0 459 519 A1**

## (12) EUROPEAN PATENT APPLICATION

(21) Application number: 91108968.8

(22) Date of filing: 31.05.91

(51) Int. Cl.⁵: **D21G 1/02**, F16C 13/00, D21H 13/40

(30) Priority: 01.06.90 US 532209

(43) Date of publication of application: 04.12.91 Bulletin 91/49

(84) Designated Contracting States: DE FR GB IT

(71) Applicant: LYDALL, INC.
One Colonial Road
Manchester, CT 06040(US)

(72) Inventor: Kokoszka, William
34 Lighthouse Hill Road
Windsor, Connecticut 06095(US)

(74) Representative: Huber, Bernhard, Dipl.-Chem. et al
Patentanwälte H. Weickmann, Dr. K. Fincke
F.A. Weickmann, B. Huber Dr. H. Liska, Dr. J.
Prechtel Möhlstrasse 22 Postfach 860 820
W-8000 München 86(DE)

(54) Roll fill material and a filled calender roll covered with said material.

(57) A roll fill material for calender rolls is provided. The material, which comprises 50-85% cotton fibers, 5-25% fiberglass, 5-25% paper filler, 5-25% resin and 0-10% synthetic fibers exhibits improved mark recovery and heat resistance. The roll fill material may further comprise a heat resistant, lubricating additive. A filled calender roll is also provided.

EP 0 459 519 A1

## BACKGROUND OF THE INVENTION

The present invention relates to filled calender rolls. More particularly, the present invention provides an improved roll fill material for such rolls.

Calendering machines are universally employed in the paper finishing industry to impart desired surface qualities such as gloss, smoothness and specific print characteristics to high-grade printing papers and other types of specialty papers. In general, calender machines comprises a series of roll pairs, with each roll pair defining a pressure nip through which the paper being calendered is conducted. The rolls are formed from iron, steel or steel alloy cores, and at least some of the roll pairs comprise metallic roll cores covered or "filled" with an elastic roll fill material designed to deform under the pressure applied at the nip.

Traditionally, the roll fill material used to cover the metallic roll core is produced as a paper-like web on standard paper making equipment. After the roll fill material is formed on the paper making equipment, it is die cut into octagon-shaped or circular discs having a predetermined outside diameter. A central aperture dimensioned to closely approximate the outside diameter of the roll core is also cut into each disc. The discs are then stacked axially on the core and compressed together under a pressure of about 500-600 bar to form the filling for the calender roll. Subsequently, the roll fill material is cylindrically cut to size, ground and polished to complete the filled roll.

A roll fill material comprising cotton fibers has predominated in this art. In some cases the cotton fibers are combined with other fibrous materials. In Europe, for example, the standard roll fill material consists of 80% cotton fibers and 20% wool fibers. Roll fill materials comprising up to 50% asbestos fibers are also known. U.S. Patent No. 4,659,616 discloses a filler material comprising cotton/carbon or cotton/wool/carbon fiber blends. Lampblack may also be incorporated in the material taught by this reference; however, if lampblack is included in the furnish it is difficult to manufacture the material on paper making equipment.

The improved surface qualities produced by the cotton fiber and cotton/wool fiber roll fill materials discussed above account for their widespread use. However, such roll fill materials present a number of technical and economic difficulties. Chief among these is poor thermal conductivity which results in roll surface scorching due to the high temperatures and pressure produced at the nip.

Roll surface scorching quickly leads to tearing of the paper being calendered and to the passage of foreign bodies through gaps formed in the roll's surface. Once this occurs, the calendering line must be shut down and the roll removed for re-polishing. If the roll's surface cannot be repaired on site, the roll must be shipped off for re-filling. The economic loss resulting from calender down time, calender maintenance, damaged paper and the cost of re-filling is significant.

In addition to the damage caused by scorching, imperfections or marks may form in the roll's surface due to the presence of foreign bodies in either the paper being calendered or the calender itself. Marks formed in the surface of the calender roll are immediately transferred to the paper. Thus, if the roll fill material is unable to recover on its own within a relatively short period of time from a mark formed in its surface, the calender must be shut down and the roll removed for re-polishing. If the surface of the roll cannot be repaired on site, the roll must be shipped off for re-filling. Again, the costs resulting from calender down time, maintenance, damaged paper and refilling are significant.

Accordingly, it is an object of the present invention to provide a roll fill material having improved thermal stability and mark recovery.

It is a further object of the present invention to provide such an improved roll fill material which can be manufactured on standard paper making equipment.

## SUMMARY OF THE INVENTION

The present invention meets the above-stated objects by providing a roll fill material comprising by weight 50-85% cotton fibers, 5-25% fiberglass, 5-25% paper filler, 5-25% resin and 0-10% synthetic fibers. The roll fill material is manufactured on standard paper making equipment.

In a preferred form of the invention the roll fill material further comprises a heat resistant, lubricating additive.

In the most preferred embodiment of the invention, the roll fill material comprises a paper-like web composed of a plurality of fiber-based layers, each layer comprising 50-85% cotton fibers, 5-25% fiberglass, 5-25% paper filler, 5-25% resin and 0-10% synthetic fibers.

A filled calender roll is also provided. The roll comprises a cylindrical metallic core covered by the above-described roll fill material. The fill material is formed in a paper-like web on a paper making machine and then cut into round or octagonal discs. A central aperture is cut into each disc, and the discs are then stacked axially along the surface of the metallic core and pressed together to form the covering for the roll.

## DETAILED DESCRIPTION OF THE INVENTION

The roll fill material taught by the present invention comprises 50-85%, preferably 55-75%, by weight of cotton fibers. Re-processed cotton fibers from almost any source may be employed. As noted previously, cotton fibers are extensively employed in the manufacture of roll fill materials. Those skilled in the art recognize that cotton fibers are particularly suitable for imparting desired surface qualities such as gloss, smoothness and specific print characteristics to high-grade printing papers and other types of specialty papers.

The roll fill material further comprises 5-25%, preferably 10-20%, fiberglass. The fiberglass provides the roll fill material with improved thermal stability, since glass fibers are far more resistant to the heat generated during the calendering process than are the cotton fibers which make up the largest proportion of the material.

The use of fiberglass also provides another important advantage. The sheet bulking characteristics of fiberglass enhance the overall resilience of the cotton fiber/fiberglass matrix formed during the paper making process. Thus, as illustrated in Examples I and II below, the roll filler material exhibits much improved mark recovery over that available from roll fill materials containing cotton fibers alone.

Fiberglass of almost any type may be used in the roll fill material taught by the present invention; however, microglass and continuous filament fiberglass are preferred. In the most preferred embodiment of the invention, 1/4 inch continuous filament fiberglass available from PPG Industries, Pittsburgh, Penn. is employed.

The roll fill material further comprises 5-25%, preferably 5-15%, paper filler which provides the material with additional bulk and enhanced strength and heat resistance. A number of such agents are known to those skilled in the paper making art; however, calcium carbonate is preferred. In the most preferred embodiment of the invention HYDROCARB PG-3, available from OMYA, Proctor, Vt., is used.

To promote fiber to fiber binding within the material and further enhance its mark resistance and mark recovery, the material further comprises 5-25%, preferably 5-15% of resin. The resin may be selected from a broad range of both thermoplastic and thermoset resins well known to those skilled in the art. Elastomeric thermoplastic resins such as, for example, nitrile latex and acrylic latex have been found to be particularly suitable. Thermoset resins such as, for example, phenolic resin may also be employed with advantageous results.

As stated previously, the roll fill material taught by the present invention is formed as a paper-like web on standard paper making equipment. The enhanced fiber to fiber bonding achieved through the use of a thermoplastic or thermoset resin not only provides enhanced mark resistance and recovery but also provides the web with added strength in both the wet and dry states. This added strength contributes significantly to the manufacturability of the material in that the web is better able to maintain its mechanical integrity during the paper making process.

The roll fill material also comprises 0-10%, preferably 1-5%, synthetic fibers. Such fibers are added to promote fiber entanglement among all of the fibers which are contained in the material and which form the structural network or matrix of the material. The particular synthetic fibers employed may be selected from among a large number of such fibers well known to those skilled in the art; however, polyester, acrylic and nylon fibers have been found to be particularly useful. The enhanced fiber entanglement provided by the incorporation of such fibers into the material not only promotes the mechanical strength of the fiber matrix but also provides the material with added flexibility.

In a preferred embodiment of the invention, the roll fill material further comprises a heat resistant, lubricating additive. Such an additive not only enhances the thermal stability of the roll fill material, but the additive's lubricating properties aid in the sheet punching and die cutting of the discs. Graphite is preferred for this purpose, and in the most preferred embodiment of the invention ASBURY A99, available from Asbury Graphite, Asbury, NJ, is used.

In the most preferred embodiment, the roll fill material of the present invention is manufactured on paper making equipment commonly referred to by those skilled in the art as a cylinder machine. A cylinder machine is employed because it permits the roll fill material to be manufactured as a paper-like web composed of a pre-selected number of fiber-based layers comprising the constituents set forth above. In the most preferred embodiment, the web is formed as a laminate of six of such sheets, each having a thickness of about .005-.006 inches. Thus, the paper-like web from which the discs are cut has a total thickness of about .030 to about .036 inches.

Examples I and II set forth the formulation and specifications of two filler materials made according to the present invention.

3

EXAMPLE I

A laboratory filled calender roll (Invention Roll I) having a 14" diameter, a 15" roll face width and a roll fill material density of .45 lb/in$^3$ was produced. The roll fill material, comprising 60% cotton, 12% fiberglass, 10% calcium carbonate 15% resin and 3% polyester fibers, was formed as a six-layer paper-like web having a total thickness of about .032 inches.

EXAMPLE II

A second laboratory filled calender roll (Invention roll II) having a 14" diameter, a 15" roll face width and a roll fill material density of .45 lb/in$^3$ was also produced. The roll fill material for Invention Roll II comprised 60% cotton, 15% fiberglass, 10% calcium carbonate and 15% resin. The fill material was formed as a six-layer paper-like web having a total thickness of about .032 inches.

COMPARISON WITH PRIOR ART FILL MATERIAL

Both of the above-described invention rolls and a third calender roll covered with a fill material consisting of 100% cotton where mark tested at 700 fpm, 1400 pli nip load and 180°F. The test results after 60 minutes at 1000 fpm, 2000 pli nip load and 180° - 245°F for the rolls were as follows:

## Invention Roll I

| Foreign Object Thickness | Mark Depth | Resistance | Recovery |
|---|---|---|---|
| .015" | .002" | 87% | 100% |
| .030" | .0045" | 85% | 100% |
| .045" | .007" | 84% | 79% |
| .0606" | .014" | 77% | 54% |

## Invention Roll II

| Foreign Object Thickness | Mark Depth | Resistance | Recovery |
|---|---|---|---|
| .015" | .001" | 93% | 100% |
| .030" | .0045" | 85% | 100% |
| .045" | .0075" | 83% | 87% |
| .0606" | .0115" | 81% | 70% |

## Cotton Roll - 100% cotton

| Foreign Object Thickness | Mark Depth | Resistance | Recovery |
|---|---|---|---|
| .015" | .002" | 87% | 100% |
| .030" | .008" | 73% | 100% |
| .045" | .014" | 69% | 79% |
| .0606" | .022" | 64% | 51% |

The test results clearly demonstrate that the roll fill material of the present invention provides much improved mark recovery compared to the mark recovery available from a roll fill material consisting of 100%. cotton. This is particularly the case where the size of the object forming the mark is large.

While preferred embodiments have been shown and described, various modifications and substitutions may be made without departing from the spirit and scope of the invention. Accordingly, it is to be understood that the present invention has been described by way of example and not by limitation.

**Claims**

**1.** A roll fill material for calender rolls, said material comprising by weight:
50-85% cotton fibers;
5-25% fiberglass;
5-25% paper filler;
5-25% resin, and

0-1Ø% synthetic fiber.

2. The roll fill material of claim 1 wherein said cotton fibers comprise 55-75% by weight of said material.

3. The roll fill material of claim 1 wherein said fiberglass comprises 1Ø-2Ø% by weight of said material.

4. The roll fill material of claim 1 wherein said paper filler comprises 5-15% by weight of said material.

5. The roll fill material of claim 1 wherein said resin comprises 5-15% by weight of said material.

6. The roll fill material of claim 1 wherein said synthetic fibers comprise 1-5% by weight of said material.

7. The roll fill material of claim 1 further comprising Ø.5-5% by weight of a heat resistant, lubricating additive.

8. The roll fill material of claim 5 wherein said heat resistant, lubricating additive comprises 1-3% by weight of said material.

9. The roll fill material of claim 1 wherein said cotton fiber is re-processed cotton fiber.

10. The roll fill material of claim 1 wherein said fiberglass is selected from the group consisting of continuous filament fiberglass and microglass.

11. The roll fill material of claim 1 wherein said paper filler is calcium carbonate.

12. The roll fill material of claim 1 wherein said resin is selected from the group consisting of thermoplastic and thermoset resins.

13. The roll fill material of claim 12 wherein said resin is selected from the group consisting of nitrile resins and acrylic resins.

14. The roll fill material of claim 12 wherein said resin is a phenolic resin.

15. The roll fill material of claim 1 wherein said synthetic fibers are selected from the group consisting of polyester fibers, acrylic fibers and nylon fibers.

16. The roll fill material of claim 5 wherein said heat resistant, lubricating additive is graphite.

17. A roll fill material for calender rolls, said material comprising by weight:
55-75% cotton fiber;
1Ø-2Ø% fiberglass;
5-15% paper filler;
5-15% resin, and
1-5% synthetic fibers.

18. The roll fill material of claim 17 further comprising 1-3% by weight of a heat resistant, lubricating additive.

19. The roll fill material of claim 17 wherein said paper filler is calcium carbonate.

20. The roll fill material of claim 18 wherein said heat resistant, lubricating additive is graphite.

21. A roll fill material for a calender roll, said material comprising a paper-like web composed of a plurality of fiber-based layers, each of said layers comprising by weight:
5Ø-85% cotton fibers;
5-25% fiberglass;
5-25% paper filler;
5-25% resin, and

∅-1∅% synthetic fibers.

22. The roll fill material of claim 2∅ wherein each of said layers further comprises ∅.5-5% by weight of a heat resistant, lubricating additive.

23. A filled calender roll including a cylindrical core and a roll fill material covering said core, said roll fill material comprising by weight 5∅-85% cotton fiber, 5-25% fiberglass and 5-25% paper filler, 5-25% resin and ∅-1∅% synthetic fibers.

24. The filled calender roll of claim 23 wherein said roll fill material further comprises ∅.5-5% of a heat resistant, lubricating additive.

25. The filled calender roll of claim 23 wherein said roll fill material is composed of a plurality of fiber-based sheets, said sheets comprising by weight 5∅-85% cotton fiber, 5-25% fiberglass, 5-25% paper filler, 5-25% resin and ∅-1∅% synthetic fibers.

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | WO-A-8 403 113 (D. CORDIER)<br>* page 2, line 21 - line 34; claims 2,5,6 * * page 5, line 34 - page 6, line 1 & US-A-4 659 616 (D. CORDIER) *<br>— — — | 1,2,6,15,<br>17,23 | D 21 G 1/02<br>F 16 C 13/00<br>D 21 H 13/40 |
| A | DE-C-5 819 93 (F. GÜNTHER)<br>* page 1, line 2 - line 37 *<br>— — — | 21 | |
| A | CH-A-3 763 57 (CARL FREUDENBERG KOMMANDIT-GESELLSCHAFT AUF AKTIEN)<br>* page 1, line 5 - line 10 * * page 2, line 32 - line 51 * * page 2, line 75 - line 82 * * page 3, line 89 - line 95 * * page 3, line 114 - line 115 * * page 4, line 24 - line 27 *<br>— — — | 1,13,15,<br>17,23 | |
| A | CH-A-5 254 06 (BELOIT CORPORATION)<br>* column 1, line 12 - line 16 * * column 2, line 25 - line 34 *<br>— — — | 1,3,5,6,<br>12,15,17,<br>23 | |
| A | GB-A-7 534 85 (HAWLEY PRODUCTS COMPANY)<br>* the whole document *<br>— — — | 1-3,5,10,<br>12,17 | |
| A | US-A-2 932 601 (D.M. HAWLEY ET AL.)<br>* column 3, line 14 - line 24; claim 3 * * column 4, line 27 - line 49 *<br>— — — | 1-3,5,10,<br>17 | TECHNICAL FIELDS SEARCHED (Int. Cl.5) |
| A | EP-A-0 322 287 (ARJOMARI-PRIOUX S.A.)<br>* the whole document *<br>— — — — — | 1,7,<br>10-13,15,<br>17,19 | D 21 G<br>F 16 C<br>D 21 H<br>D 21 F |

The present search report has been drawn up for all claims

| Place of search | Date of completion of search | Examiner |
|---|---|---|
| The Hague | 09 September 91 | HAEUSLER F.U. |